# FASCICULE DE BREVET EUROPEEN

(11) **EP 0 854 997 B1**
(45) Date de publication et mention de la délivrance du brevet: **24.07.2002**
(21) Numéro de dépôt: 96937366.1
(22) Date de dépôt: 30.10.1996
(51) Int. Cl.: F16L 37/02, F16L 27/08, F16L 21/035

(54) **JOINT D'ETANCHEITE COMPOSITE, ET ENSEMBLE COMPORTANT UN TEL JOINT**
ZUSAMMENGESETZTER DICHTRING UND KONSTRUKTION MIT EINEM SOLCHEN DICHTRING
COMPOSITE GASKET AND ASSEMBLY COMPRISING SAME

(30) Priorité: 30.10.1995 FR 9512797
(43) Date de publication de la demande: 29.07.1998
(60) Demande divisionnaire: 99125962.3
(73) Titulaire: Manuli Auto France, 28000 Chartres (FR)
(72) Inventeur: BARON, Daniel, F-28630 Fontenay-sur-Eure (FR)
(74) Mandataire: Benech, Frédéric
(86) Numéro de dépôt international: FR9601705
(87) Numéro de publication internationale: WO9716670

(56) Documents cités:
- DE-C- 644 601
- DE-U- 7 104 371
- DE-U- 8 807 990
- GB-A- 1 494 669
- US-A- 1 976 589

## Description

La présente invention concerne un joint d'étanchéité composite agencé pour être enfilé à frottement sur un embout de tube rigide propre à être inséré dans une pièce munie d'un orifice de connexion avec l'embout, le joint comportant au moins un anneau en matériau élastomère.

Elle concerne également un ensemble pièce/tube comprenant un tel joint.

Elle trouve une application particulièrement importante bien que non exclusive dans le domaine des raccordements de circuits refroidisseurs, de circuits de climatisation et/ou de systèmes de direction assistée de véhicules automobiles.

Un tel raccordement peut par exemple être de type amovible et/ou encliquetable.

On connaît déjà des joints de raccordements étanches et/ou de raccordements amovibles entre une extrémité de tuyau et une pièce mécanique.

Les joints connus présentent cependant des inconvénients car ils ne garantissent pas toujours une bonne étanchéité.

En effet, l'art antérieur enseigne essentiellement des joints toriques insérés dans des gorges de l'embout tubulaire dont le diamètre externe ne permet pas toujours une insertion sans jeu dans l'orifice de connexion, et ce compte tenu des cotes de tolérance pour l'usinage des pièces.

On connaît (GB-A-1.494.669) un ensemble bague avec joint torique inséré dans une gorge selon le préambule de la revendication 1.

Un tel ensemble est néanmoins difficile à monter et risque de s'endommager lors du montage.

La présente invention vise à fournir un joint répondant mieux que ceux antérieurement connus aux exigences de la pratique, notamment en ce qu'elle permet un montage simple, aisé à mettre en oeuvre, qui ne génère pas de risque d'endommagement du joint par le monteur, en ce qu'elle garantit une connexion optimisée entre l'embout et l'orifice et ce avec une tolérance des cotes bien meilleure que celle obtenue dans l'art antérieur, ce qui permet d'assurer une meilleure étanchéité du raccordement.

Dans ce but, la présente invention propose notamment un joint d'étanchéité composite selon la revendication 1.

Dans des modes de réalisation avantageux, on a de plus recours à l'une et/ou à l'autre des dispositions suivantes :
- le joint comporte deux anneaux en matériau élastomère, respectivement situés de part et d'autre de la bague ;
- le joint comporte deux bagues en matériau rigide ;
- les bagues sont reliées entre elles par un desdits anneaux en matériau élastomère dont elles sont solidaires, au moins une des dites bagues comportant l'autre joint en matériau élastomère à son autre extrémité ;
- un anneau est un joint torique ;
- l'anneau comporte une partie d'extrémité en portions de cylindre disposées angulairement autour de l'axe du joint et coopérant avec la face interne de la bague.

L'invention propose également un ensemble pièce/tube comprenant un joint composite du type décrit ci-dessus.
Elle propose également un ensemble pièce/tube avec joint composite du type décrit ci-dessus, caractérisé en ce que l'embout de tube rigide comporte une première partie en saillie par rapport à la face externe du tube, ladite première partie étant située à distance de l'extrémité du tube, et une seconde partie en saillie située à l'extrémité dudit tube, lesdites parties en saillie formant des butées de blocage longitudinal de part et d'autre du joint sur l'embout de tube.

Avantageusement, il existe un jeu longitudinal permettant un léger glissement longitudinal du joint (formant manchon) par rapport au tube entre les deux butés de blocage.

Le coulissement vient compléter et optimiser l'effort de compression des joints proportionnellement à la pression exercée.

L'invention propose également un ensemble pièce/tube comprenant un joint composite comme décrit ci-dessus, caractérisé en ce que l'embout comporte au moins une gorge annulaire dans laquelle est inséré au moins partiellement l'anneau en matériau élastomère.

La présente invention sera mieux comprise à la lecture de la description qui suit de modes de réalisation particuliers donnés à titre d'exemples non limitatifs.

Elle se réfère aux dessins qui l'accompagnent dans lesquels les figures 1 à 3 n'illustrent pas l'invention telle que revendiquée:
- La figure 1 est une vue en coupe d'un joint composite enfilé sur un embout de tube appartenant à un ensemble pièce/tube.
- La figure 2 est une vue en coupe longitudinale d'un autre joint composite.
- La figure 3 est une vue en partie en coupe d'un ensemble pièce/tube.
- La figure 4 est une vue en coupe longitudinale d'un joint composite selon un premier mode de réalisation de l'invention.
- La figure 5 est une vue en coupe longitudinale d'un joint composite selon un autre mode de réalisation.
- La figure 6 est une vue en coupe transversale selon VI-VI du joint de la figure 5.
- La figure 7 est une vue en partie en coupe d'un ensemble pièce/tube selon un autre mode de réalisation de l'invention, comprenant un joint selon la figure 5.
- La figure 8 montre un autre mode de réalisation d'un tube avec joint appartenant à un ensemble pièce/tube selon l'invention.
- Les figures 9, 10 et 11 montrent, en coupe transversale partielle, trois autres modes de réalisation de joint selon l'invention.

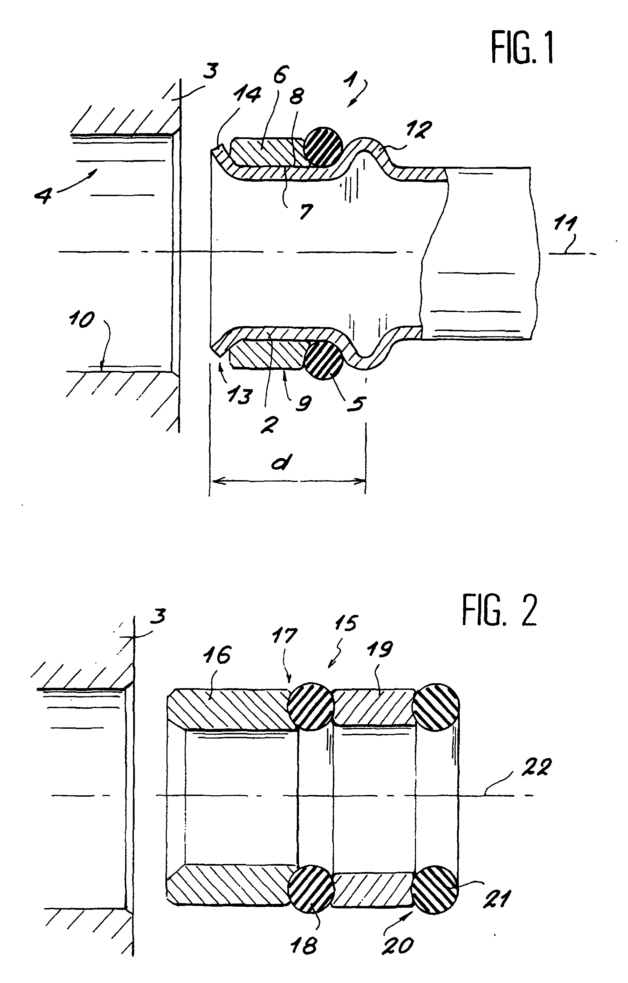

La figure 1 montre un joint d'étanchéité composite 1 enfilé à frottement sur un embout 2 de tube rigide, par exemple en aluminium, propre à être inséré dans une pièce 3 munie d'un orifice ou alésage cylindrique 4 de connexion avec l'embout 2.

Le joint comporte un anneau en matériau élastomère par exemple un joint torique 5 en caoutchouc.

Le joint composite 1 comporte de plus une bague 6 en matériau rigide; par exemple en acier ou en matière plastique rigide, en forme de manchon cylindrique, c'est à dire de hauteur supérieure à son épaisseur, compris entre 1,5 et 5 fois ladite épaisseur, par exemple de l'ordre de 2 fois ou 3. fois supérieure, située à côté et dans le prolongement longitudinal de l'anneau qui est, à l'état libre, d'épaisseur plus grande que l'épaisseur du manchon.

L'extrémité de la bague 6 est par exemple de forme partiellement annulaire, ou plus généralement de forme complémentaire à celle de l'anneau 5 pour épouser en partie la forme de la tranche dudit anneau.

Dans un autre mode de réalisation, la face de connexion entre bague et anneau est par exemple droite, c'est à dire perpendiculaire à l'axe de l'anneau.

La bague est fixée de façon inamovible à l'anneau 5 par exemple par collage, surmoulage ou vulcanisation lors de la fabrication du joint, dans le prolongement longitudinal de la bague.

La bague 6 présente une surface interne 7 cylindrique coopérant à frottement doux, avec la surface externe 8 de l'embout de tube et une surface externe 9 propre à coopérer à frottements doux avec la face interne 10 de l'orifice de connexion.

Par frottement doux on entend le respect de tolérances de cotes entre l'alésage et la bague agencée pour que la distance entre leurs deux surfaces en vis à vis soit comprise entre 0,05 mm et 0,22 mm.

Il en résulte un excellent ajustement entre l'alésage et l'embout muni de son joint.

Les axes de l'anneau en forme de joint torique 5 et de la bague 6 sont confondus avec l'axe 11 du tube sur l'embout duquel le joint d'étanchéité composite 1 est enfilé.

Le matériau élastomère peut également et par exemple être un élastomère à chaîne de butyl ou de HNBR.

Il peut être remplacé par un matériau équivalent du moment qu'il présente une bonne élasticité.

L'anneau, de section constante, s'étend par exemple de part et d'autre des faces internes 7 et externe 9 de la bague ou est sensiblement tangent au prolongement longitudinal de la face interne 7 de la bague, et est en saillie à l'état libre, par exemple de quelques dixièmes de millimètre, par rapport à la face externe 9 de la bague 6.

La bague peut quant à elle être une bague en aluminium, en acier, en acier zingué ou autre matériau rigide (en matière plastique par exemple) avec une tolérance d'ajustement de type H7g6 avec l'alésage par exemple de diamètre nominal 12 mm ; 15,3 mm ; 18,23 mm ou 21,4 mm ; l'embout de tube étant par exemple et quant à lui de diamètre externe 8,5 mm ; 11,7 mm ; 14, 7 mm ou 17, 8 mm.

Dans le mode de réalisation plus particulièrement décrit ici, l'ensemble pièce/tube est par exemple tel que l'embout 2 de tube rigide est métallique (il peut également être dans d'autre type de matériau, par exemple en matière plastique rigide) et comporte une première partie en saillie 12 par rapport à la face externe 8 du tube, par exemple obtenu par pliage de la paroi du tube.

La saillie est située à une distance d de l'extrémité 13 du tube, d étant supérieure à la hauteur totale (dimension longitudinale) du joint composite, par exemple de quelques millimètres, par exemple de 2 mm.

L'embout comprend également une seconde partie 14 en saillie, située à l'extrémité 13 du tube, obtenue par exemple par élargissement de cette dernière sur une épaisseur inférieure à celle de la bague 6.

De cette sorte, les parties 12 et 14 en saillie forment des butées annulaires ou coniques de blocage longitudinal de part et d'autre du joint sur l'embout de tube, de diamètre maximal inférieur au diamètre externe de la bague 6.

Le tube est fixé sur la pièce 3 par l'intermédiaire d'une plaque (non représentée) rendue solidaire de l'embout et fixée sur la pièce par exemple par l'intermédiaire de boulons ou tous autres moyens de fixation connus (non représentés).

La figure 2 montre un joint 15 d'étanchéité comprenant une première bague 16 dont l'extrémité 17 en forme de portion de cylindre est solidaire d'un premier joint torique 18 par ailleurs solidaire, de son autre coté, d'une deuxième bague 19, elle même comportant à son autre extrémité 20 un deuxième joint 21 en matériau élastomère, les bagues et les joints étant d'axe identique 22, le diamètre des joints 18 et 21 étant supérieur à l'épaisseur des bagues 16 et 19.

Les bagues 16 et 19 sont par exemple de dimensions identiques.

Une des bagues peut également être de plus petite dimension que l'autre, par exemple avoir une hauteur égale au 2/3 de la hauteur de l'autre bague.

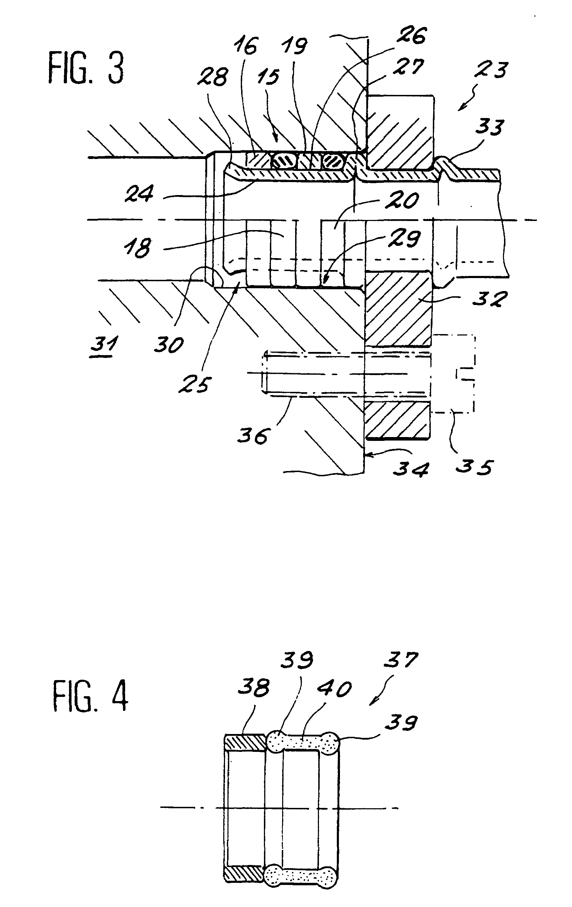

La figure 3 montre un ensemble pièce/tube 23 comprenant un joint 15 selon la figure 2 muni des bagues annulaires 16 et 19 dont les faces internes coopèrent à frottement doux en présentant une forme interne 24 complémentaire à la forme externe 25 du tube 26 en aluminium sur lequel elles sont enfilées avec les anneaux 18 et 20.

Le joint 15 n'est pas fixé longitudinalement pour permettre un léger glissement sur le tube d'un côté, mais est néanmoins bloqué dans sa course d'un côté par un pli 27 et de l'autre côté par une partie en saillie 28.

Une telle disposition favorise l'étanchéité.

Les faces externes cylindriques des bagues 16 et 17 coopèrent à frottement avec la face interne 29 de l'alésage cylindrique 30 de la pièce 31.

Une platine de fixation 32 fixée à l'embout du tube 26 par les plis 27 et 33 de part et d'autre des faces externes planes de la platine 32 permet la fixation du tube solidaire de la platine sur la face externe plane 34 de la pièce, par exemple par un boulon traversier 35 vissé dans un alésage 36 de ladite pièce.

L'invention vise également les modes de réalisation où l'anneau en matériau élastomère n'est pas un joint torique mais est un joint présentant au moins une surface à pans coupé, par exemple un joint de section octogonale, et/ou est un joint à profil spécial, ceux où le joint composite comporte trois anneaux en matériau élastomère ou plus, et/ou trois bagues en matériau rigide ou plus. Le joint à profil spécial est par exemple un joint 37 (cf. figure 4) muni d'une bague cylindrique 38 en métal ou en matériau rigide et d'un anneau en matériau élastique en forme de 8 allongé, ou d'haltères allongés comprenant deux portions d'extrémité toriques 39 et une partie 40 de jonction allongée, cylindrique, parallèle à l'axe du joint.

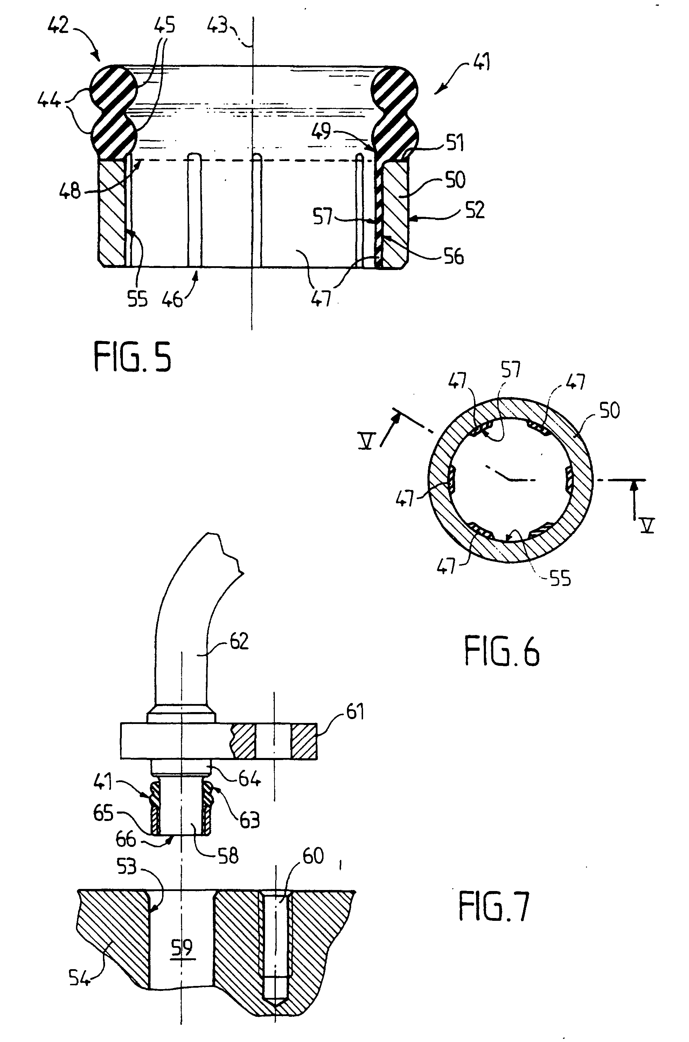

Les figures 5 et 6 montrent un autre mode de réalisation d'un joint 41 selon l'invention.

Le joint 41 comporte un anneau 42 en matériau élastomère formé en partie par un double joint torique sensiblement en forme de 8 allongé parallèlement à l'axe 43 du joint

Plus généralement l'anneau 42 comporte d'un même côté du joint par rapport à l'axe 43, deux lignes ou surfaces d'étanchéité ou de pression, respectivement, 44 et 45, situées deux à deux dans un même plan cylindrique d'axe 43 et formé par les parties renflées du 8.

Ledit anneau 42 est agencé pour coopérer d'une part avec la face externe de l'embout et d'autre part avec la face interne de la pièce.

L'anneau 42 comporte de plus une partie d'extrémité 46 en portions 47 de cylindre de faible épaisseur disposées angulairement, par exemple six portions en forme de lamelles parallèles à, et situées du côté de, l'axe 43 s'inscrivant dans un cylindre annulaire et rattachées par une extrémité 48 à la face inférieure 49 de la partie en 8 de l'anneau avec laquelle ils sont solidaires.

Le joint 41 comporte également une bague 50 en matériau rigide, en forme de manchon cylindrique, du type décrit en référence à la figure 1, et dont l'extrémité 51 de jonction avec la partie en forme de 8 de l'anneau est par exemple droite.

La surface externe 52 de la bague est agencée pour coopérer à frottement doux avec la face interne 53 (Cf. figure 7) d'un alésage percé dans la pièce 54, et sa face interne 55 coopère avec les faces externes 56 des portions 47 en forme de lamelles, dont les faces internes 57 viennent elles-mêmes coopérer à frottement avec l'embout 58 du tube.

Plus précisément les portions 47 forment des lamelles s'étendant par exemple sur toute la hauteur de la bague 50 et selon des arcs de cercle compris entre 5° et 50°, par exemple de 10°.

La répartition angulaire des portions 47 est symétrique, et varie en fonction du nombre de . portions qui peut être compris entre deux et vingt, par exemple trois, quatre, six ou huit.

L'épaisseur des portions 47 en forme de lamelles est par exemple comprise entre 0,3 mm et 2 mm, par exemple de 0,5 mm.

On a représenté sur la figure 7 un ensemble pièce/tube comprenant la pièce 54 munie d'un orifice 59 formé par l'alésage cylindrique de face interne 53, et d'un orifice 60 de fixation par vis avec une bride 61.

L'ensemble comprend un tube 62 solidaire de la bride, muni de l'embout 58 sur l'extrémité duquel est simplement enfilé à frottement le joint 41 décrit en référence aux figures 5 et 6.

L'extrémité extérieure 63 de la partie en forme de 8 allongé vient en butée sur une excroissance 64 de la bride, l'extrémité 65 de la bague venant quant à elle araser le bord terminal 66 de l'embout du tube.

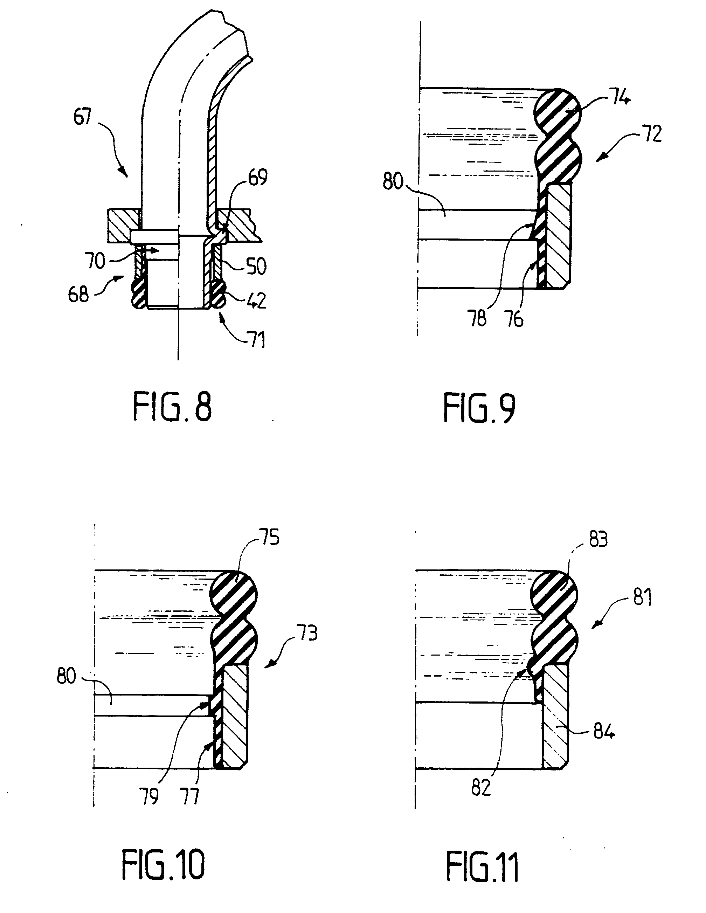

La figure 8 montre un autre mode de réalisation d'un embout selon l'invention avec joint 68, du type décrit en référence à la figure 5, mais inversé de 180° par rapport à sa disposition décrite en référence à la figure 7.

Plus précisément l'embout 67 comporte une collerette de butée 69, une zone cylindrique 70 en surépaisseur de 1 à 3 dixième de millimètre, agencé pour coopérer en force avec l'extrémité de la bague 50 recouverte intérieurement par les lamelles en élastomère du joint, et l'embout proprement dit agencé pour coopérer avec l'extrémité 71 en 8 allongé de l'anneau 42, entièrement situé du côté de l'extrémité de l'embout.

L'extrémité de la bague rigide est en butée sur la collerette 69.

On a représenté sur les figures 9, 10 et 11, trois autres modes de réalisation de joint selon l'invention, munis de portions d'extrémités différentes.

Les figures 9, 10 montrent un joint 72, 73 avec anneau 74, 75 respectivement muni d'une portion d'extrémité annulaire 76, 77 comprenant une partie en saillie 78, 79, de section triangulaire 78, arrondie ou rectangulaire 79 apte à coopérer avec une gorge annulaire interne, 80 pratiquée dans la face externe de l'embout.

La figure 11 montre un joint 81 avec excroissance interne 82, annulaire, en partie inférieure de l'anneau 83, sur une distance inférieure (par exemple le 1/10ème, le 1/4 ou le 1/3), ou égale à la hauteur de la bague 84, et propre à bloquer de façon amovible le joint sur l'embout.

Une telle disposition autorise un montage facilité, grâce à cette fixation provisoire du joint.

Comme il va de soi et comme il résulte d'ailleurs de ce qui précède, la présente invention n'est pas limitée aux modes de réalisation qui ont été plus particulièrement décrits.

## Revendications

1. Joint (1, 15, 41) d'étanchéité composite pour embout (2, 58) de tube rigide propre à être inséré dans une pièce (3, 54) munie d'un orifice (1, 4, 59) en forme d'alésage cylindrique, de connexion avec ledit embout, comportant au moins un anneau (5, 18, 21, 42) en matériau élastomère et au moins une bague (6, 16, 19, 50) en matériau rigide solidaire de l'anneau (5, 18, 21, 42) en matériau élastomère, la bague étant de forme annulaire, située dans le prolongement de l'anneau parallèlement à, et d'axe confondu avec, l'axe de l'anneau, le joint étant agencé pour être enfilé à frottement sur l'embout, l'extrémité de jonction (17, 52) de la bague étant de forme complémentaire avec celle de l'anneau pour épouser au moins en partie la forme de la tranche dudit anneau, **caractérisé en ce que** ladite bague étant de surface externe (9, 52) propre à coopérer à frottement doux avec la face interne (10, 53) de l'orifice de connexion, ladite bague est en forme de manchon cylindrique de hauteur comprise entre 1,5 fois et 5 fois son épaisseur, de surface interne (7) propre à coopérer à frottement doux, directement ou via une partie d'extrémité (46) de l'anneau, avec la face externe (8) de l'embout, et **en ce que** l'anneau ou un des anneaux (42) en matériau élastique est de section sensiblement en forme de 8 allongé.

2. Joint (15) selon la revendication 1, **caractérisé en ce que** il comporte deux anneaux (18, 21) en matériau élastomère, respectivement situés de part et d'autre de la bague (19).

3. Joint (15) selon l'une quelconque des revendications précédentes, **caractérisé en ce que** il comporte deux bagues (16, 19) en matériau rigide.

4. Joint selon la revendication 3 dépendante de la revendication 2, **caractérisé en ce que** les bagues (16, 19) sont reliées entre elles par un desdits anneaux (18) en matériau élastomère dont elles sont solidaires, au moins une des dites bagues (19) comportant l'autre joint (21) en matériau élastomère à son autre extrémité (20).

5. Joint selon l'une quelconque des revendications précédentes, **caractérisé en ce que** un anneau est un joint torique.

6. Joint selon l'une quelconque des revendications précédentes, **caractérisé en ce que** l'anneau en matériau élastique en forme de 8 allongé, est de section en forme d'haltère comprenant deux portions d'extrémité toriques 39 et une partie 40 de jonction allongée cylindrique.

7. Joint selon l'une quelconque des revendications précédentes, **caractérisé en ce que** l'anneau (42) comporte une partie d'extrémité (46) en portions de cylindre, disposées angulairement autour de l'axe du joint et coopérant avec la face interne de la bague.

8. Joint selon la revendication 7, **caractérisé en ce que** les portions (47) forment des lamelles s'étendant sur toute la hauteur de la bague et selon des arcs de cercle compris entre 5° et 50°, reparties régulièrement .

9. Joint selon l'une quelconque des revendications 1 à 6, **caractérisé en ce que** l'anneau (74, 75) comporte une portion d'extrémité annulaire (76, 77) munie d'une partie en saillie (78, 79) de section triangulaire (78) arrondie ou rectangulaire (79) apte à coopérer avec une gorge annulaire interne (80) pratiquée dans la face externe de l'embout.

10. Ensemble pièce/tube comprenant un joint selon l'une quelconque des revendications précédentes.

11. Ensemble pièce/tube (2, 3) selon la revendication 10, **caractérisé en ce que** l'embout (2) de tube rigide comporte une première partie (12) en saillie par rapport à la face externe (8) du tube située à une distance d de l'extrémité (13) dudit tube, et une seconde partie (14) en saillie par rapport à la face externe (8) du tube, située à l'extrémité (13) dudit tube, lesdites parties en saillie (12, 14) formant des butées de blocage longitudinal de part et d'autre du joint sur l'embout de tube.

12. Ensemble pièce/tube selon la revendication 10, **caractérisé en ce que** l'embout comporte au moins une gorge annulaire dans laquelle est insérée au moins une partie de l'anneau en matériau élastomère.

13. Ensemble pièce/tube selon la revendication 10, **caractérisé en ce que** l'embout (67) comporte une collerette de butée (69) et est agencé pour coopérer avec l'extrémité (71) de l'anneau (42) entièrement situé du côté de l'extrémité de l'embout.

## Claims

1. Composite gasket (1, 15, 41) for a rigid tube connector (2, 58) suitable for being inserted into a component (3, 54) provided with an opening (1, 4, 59) in the shape of a cylindrical hole, for connection with said connector, having at least one ring (5, 18, 21, 42) made of elastomeric material and at least one bushing (6, 16, 19, 50) made of rigid material integral with the ring (5, 18, 21, 42) made of elastomeric material, the bushing being annular in form, located in the extension of the ring parallel to, and with, the same axis as the axis of the ring, the gasket being arranged so as to be slipped with friction onto the connector, the joining end (17, 52) of the bushing being complementary in shape with that of the ring in order to take on at least partly the shape of the section of said ring, **characterised in that** said bushing having an outer surface (9, 52) suitable for co-operating with gentle friction with the inner face (10, 53) of the connection opening,
said bushing is in the shape of a cylindrical sleeve with a height comprised between 1.5 times and 5 times its thickness, with an inner surface (7) suitable for co-operating with gentle friction, directly or via an end portion (46) of the ring, with the outer face (8) of the connector,
and **in that** the ring or one of the rings (42) made of elastic material has a cross-section substantially in the shape of an elongated 8.

2. Gasket (15) according to Claim 1, **characterised in that** it has two rings (18, 21) made of elastomeric material, located respectively on either side of the bushing (19).

3. Gasket (15) according to any one of the preceding claims, **characterised in that** it has two bushings (16, 19) made of rigid material

4. Gasket according to Claim 3 dependent on Claim 2, **characterised in that** the bushings (16, 19) are connected together by one of said rings (18) made of elastomeric material, with which they are integral, at least one of said bushings (19) having the other gasket (21) made of elastomeric material at its other end (20).

5. Gasket according to any one of the preceding claims, **characterised in that** a ring is an O-ring seal.

6. Gasket according to any one of the preceding claims, **characterised in that** the ring made of elastic material in the shape of an elongated 8 has a dumbbell-shaped cross-section comprising two toric end portions 39 and a cylindrical elongated joining part 40.

7. Gasket according to any one of the preceding claims, **characterised in that** the ring (42) has an end part (46) made of portions of a cylinder, angularly arranged about the axis of the gasket and co-operating with the inner face of the bushing.

8. Gasket according to Claim 7, **characterised in that** the portions (47) form strips extending over the whole height of the bushing and as arcs of a circle comprised between 5° and 50°, regularly distributed.

9. Gasket according to any one of Claims 1 to 6, **characterised in that** the ring (74, 75) has an annular end portion (76, 77) provided with a projecting part (78, 79) with a rounded triangular (78) or rectangular (79) cross-section suitable for co-operating with an inner annular throat (80) made in the outer face of the connector.

10. Component/tube assembly comprising a gasket according to any one of the preceding claims.

11. Component/tube assembly (2, 3) according to Claim 10, **characterised in that** the rigid tube connector (2) has a first part (12) projecting from the outer face (8) of the tube located at a distance d from the end (13) of said tube, and a second part (14), projecting from the outer face (8) of the tube, located at the end (13) of said tube, said projecting parts (12, 14) forming longitudinal blocking stops on either side of the gasket on the tube connector.

12. Component/tube assembly according to Claim 10, **characterised in that** the connector has at least one annular groove into which at least part of the ring made of elastomeric material is inserted.

13. Component/tube assembly according to Claim 10, **characterised in that** the connector (67) has a stop flange (69) and is arranged so as to co-operate with the end (71) of the ring (42) located entirely on the side of the end of the connector.

## Patentansprüche

1. Zusammengesetzte Dichtungsverbindung (1, 15, 41) für den Ansatz (2, 58) eines starren Rohres zum Einschieben in ein Teil (3, 54) mit einer Öffnung (1, 4, 59) in Form einer zylinderförmigen Bohrung zum Anschluss des Ansatzes, mit wenigstens einem Ring (5, 18, 21, 42) aus einem Elastomermaterial und wenigstens einer Buchse (6, 16, 19, 50) aus starrem Material, das mit dem Ring (5, 18, 21, 42) aus einem Elastomermaterial aus einem Stück besteht, wobei die Buchse eine Ringform hat und in der Verlängerung des Ringes parallel zu und koaxial mit der Achse des Ringes liegt, und die Verbindung unter Reibung auf den Ansatz aufgeschoben wird und das Ende der Verbindung (17, 52) eine komplementäre Form zu der des Ringes hat, um sich wenigstens teilweise an die Querschnittsform des Ringes anzupassen,
**dadurch gekennzeichnet,**
**dass** die Buchse mit ihrer Außenfläche (9, 52) mit leichter Reibung mit der Innenfläche (10, 53) der Anschlussöffnung zusammenwirkt,
**dass** die Buchse die Form einer zylinderförmigen Muffe mit einer Höhe zwischen den 1,5-fachen und dem 5-fachen ihrer Dicke aufweist, die Innenfläche (7) mit leichter Reibung direkt oder über ein Endteil (46) des Ringes mit der Außenfläche (8) des Ansatzes zusammenwirkt,
und **dass** der Ring oder einer der Ringe (42) aus einem elastischen Material einen Querschnitt mit im wesentlichen der Form einer verlängerten 8 aufweist.

2. Verbindung (15) nach Anspruch 1,
**dadurch gekennzeichnet,**
**dass** sie zwei Ringe (18, 21) aus einem Elastomermaterial enthält, die zu beiden Seiten der Buchse (19) liegen.

3. Verbindung (15) nach einem der vorangehenden Ansprüche,
**dadurch gekennzeichnet,**
**dass** sie zwei Buchsen (16, 19) aus einem starren Material enthält.

4. Verbindung nach Anspruch 2 und 3,
**dadurch gekennzeichnet,**
**dass** die Buchsen (16, 19) über einen der Ringe (18) aus Elastomermaterial miteinander verbunden sind, mit dem sie aus einem Stück bestehen, und
**dass** wenigstens eine der Buchsen (19) die andere Dichtung (21) aus Elastomer an ihrem anderen Ende (20) enthält.

5. Verbindung nach einem der vorangehenden Ansprüche,
**dadurch gekennzeichnet, dass** ein Ring ein O-Ring ist.

6. Verbindung nach einem der vorangehenden Ansprüche,
**dadurch gekennzeichnet,**
**dass** der Ring aus elastischem Material mit der Form einer verlängerten 8 einen Querschnitt in der Form einer Hantel mit zwei wulstförmigen Endteilen 39 und einem Teil 40 zur Verbindung des verlängerten Zylinders aufweist.

7. Verbindung nach einem der vorangehenden Ansprüche,
**dadurch gekennzeichnet,**
**dass** der Ring (42) ein Endteil(46) aus Zylinderabschnitten enthält, die winkelmäßig um die Achse der Verbindung angeordnet sind und mit der Innenfläche der Buchse zusammenwirken.

8. Verbindung nach Anspruch 7,
**dadurch gekennzeichnet,**
**dass** die Lamellen bildenden Teile (47) sich über die ganze Höhe der Buchse und über Kreisbögen zwischen 5° und 50° erstrecken, die gleichmäßig verteilt sind.

9. Verbindung nach einem der Ansprüche 1 bis 6,
**dadurch gekennzeichnet,**
**dass** der Ring (74, 75) ein ringförmiges Endteil (76, 77) aufweist, das mit einem vorspringenden Teil (78, 79) mit einem dreieckförmigen (78), einem abgerundeten oder rechteckigen (79) Querschnitt versehen ist, der mit einer ringförmigen Nut (80) auf der Außenseite der Buchse zusammenwirkt.

10. Anordnung aus Teil/Rohr mit einer Verbindung gemäß einem der vorangehenden Ansprüche.

11. Anordnung aus Teil/Rohr (2, 3) nach Anspruch 10,
**dadurch gekennzeichnet,**
**dass** der Ansatz (2) des starren Rohres einen ersten Teil (12) enthält, der über die Außenfläche (8) des Rohres hinausragt und bei einem Abstand d von dem Ende (13) des Rohres liegt, und dass ein zweiter Teil (14), der über die Außenfläche (8) des Rohres hinausragt, bei dem Ende (13) des Rohres liegt, und dass die hinausragenden Teile (12, 14) Anschläge in Längsrichtung zu beiden Seiten der Dichtung auf dem Rohransatz bilden.

12. Anordnung aus Teil/Rohr nach Anspruch 10,
**dadurch gekennzeichnet,**
**dass** der Ansatz wenigstens eine ringförmige Nut enthält, in die wenigstens ein Teil des Rings aus Elastomermaterial eingreift.

13. Anordnung aus Teil/Rohr nach Anspruch 10,
**dadurch gekennzeichnet,**
**dass** der Ansatz (67) einen Anschlagflansch (69) enthält und mit dem Ende (71) des Rings (42) zusammenwirkt, der vollständig auf der Seite des Endes des Ansatzes liegt.
